# EUROPÄISCHE PATENTSCHRIFT

(11) **EP 1 201 307 B1**
(45) Veröffentlichungstag und Bekanntmachung des Hinweises auf die Patenterteilung: **18.01.2006**
(21) Anmeldenummer: 01250368.6
(22) Anmeldetag: 18.10.2001
(51) Int. Cl.: B02C 4/08, B02C 4/30

(54) **Walzenzerkleinerer**
Riller crusher
Broyeur à rouleau

(30) Priorität: 21.10.2000 DE 10052357
(43) Veröffentlichungstag der Anmeldung: 02.05.2002
(73) Patentinhaber: Recom Patent & License GmbH, 10719 Berlin (DE)
(72) Erfinder: Detampel, Hans, 12161 Berlin (DE)
(74) Vertreter: Scholz, Hartmut

(56) Entgegenhaltungen:
- DE-B- 1 086 526
- DE-B- 1 109 010
- US-A- 4 081 143

## Beschreibung

Die Erfindung betrifft einen Walzenzerkleinerer mit in einem Gehäuse angeordneten, gegeneinander drehbaren Zerkleinerungswalzen, die aus einer Vielzahl von nebeneinander angeordneten, unterschiedliche Durchmesser aufweisenden Zerkleinerungsscheiben bestehen, die Zerkleinerungsscheiben auf einer gemeinsamen Welle alternierend nebeneinander angeordnet sind, und zwar derart, dass jeweils die Zerkleinerungsscheiben großen Durchmessers einer Zerkleinerungswalze gegenüber den Zerkleinerungsscheiben kleineren Durchmessers der anderen Zerkleinerungswalze angeordnet sind.

Mit derartigen Walzenzerkleinerern soll sprödes, wenig schleißendes Zerkleinerungsgut, vorzugsweise durch Tiefkühlmittel versprödete Altreifenstücke, Abfallprodukte aus technischen Gummiartikeln sowie Kunststoff-Metall/Textil-Verbundwerkstoffe verarbeitet werden.

Aus der GB A 1,057,206 und der US 4,081,143 ist ein Walzenzerkleinerer mit in einem Gehäuse, gegeneinander drehbaren Zerkleinerungswalzen, bestehend aus Zerkleinerungsscheiben unterschiedlichen Durchmessers, die auf jeweils einer gemeinsamen Welle alternierend angeordnet sind. Aus der DE 1 109 010 und der DE 1 086 526 ist ebenfalls ein Walzenzerkleinerer bekannt, der eine Vielzahl von nebeneinander angeordneter mit unterschiedliche Durchmesser aufweisende Zerkleinerungsscheiben aufweist. Eine gleich bleibende Granulierungsqualität ist kann bei den o.g. Vorrichtungen nicht gewährleistet werden.

Altreifen stellen ein umfangreiches Rohstoffpotential dar. Der Altgummi soll nach dem bekannten Kryogenverfahren durch Granulieren im versprödeten Zustand in einen wieder verwendbaren Sekundärrohstoff umgewandelt werden, um ihn erneut einem Produktionsprozeß zu führen zu können.

Es hat sich gezeigt, dass die in bisher bekannten kryogenen Zerkleinerungsanlagen hergestellten Gummigranulate und Gummimehle für eine technische Wiederaufbereitung und Weiterverarbeitung sehr ungünstige Eigenschaften aufweisen. Sie sind zu groß, mit zu hohen Anteilen an nicht voneinander getrennten Begleitstoffen, wie Stahlarmierungen oder Textilfasern, behaftet und von uneinheitlicher Konsistenz. Derartige Altgummiprodukte sind für eine großtechnische Wiederverarbeitung ungeeignet und führen zu erheblichen technischen Schwierigkeiten.

Aufgabe der vorliegenden Erfindung ist es, einen Zerkleinerer der eingangs beschriebenen Art zu schaffen, mit dem spröde, wenig schleißende Materialien, vorzugsweise kryogen versprödete Altgummiprodukte, zu Granulaten und feinen Mehlen gleichmäßiger Konsistenz verarbeitet werden können,wobei Begleitstoffe weitgehend unzerkleinert bleiben.

Gelöst wird diese Aufgabe dadurch, dass die Zerkleinerungsscheiben der Zerkleinerungswalzen mit einer unterschiedlich feinen Riffelung versehen sind. Zur Ausgestaltung ist es dabei vorgesehen, dass die Zerkleinerungsscheiben, die mit einer feineren Riffelung versehen sind einen geringeren Durchmesser aufweisen als die Zerkleinerungsscheiben, die mit einer gröberen Riffelung versehen sind.

Durch diese Maßnahmen wird ein Walzenzerkleinerer geschaffen, mit dem versprödeter Altgummi zu Gummigranulat und Gummimehl vermahlen werden kann. Diese Zerkleinerer sind durch ihre Konstruktion und die bei ihrer Fertigung verwendeten Materialien für die besonderen Beanspruchungen im Tiefsttemperaturbetrieb ≤ minus 100°C ausgelegt.

Der Gummianteil wird zu einem Granulat mit relativ gleichmäßiger Kornstruktur zerkleinert. Textil- und/oder Stahlbestandteile bleiben weitgehend unzerkleinert, so dass sie leicht abgetrennt werden können.

Die Zerkleinerer haben drehzahlgesteuerte Antriebe, wodurch es möglich ist, den Zerkleinerungsprozeß feinfühlig der Art der zu verarbeitenden Altguzuniqualitäten anzupassen. Durch die Variabilität des Zerkleinerungsspaltes kann ein Gummigranulat vorbestimmter Korngröße, Kornoberfläche und Kornstruktur hergestellt werden. Die Drehzahl der gegeneinander drehenden Walzen kann unabhängig voneinander variiert werden.

Das gesamte Zerkleinerer- oder Mühlensystem ist so aufgebaut, dass Wartungs- und Reparaturarbeiten schnell und problemlos vorgenommen werden können. Zu diesem Zweck können die einzelnen Mühlenkomponenten mit wenigen Handgriffen mittels einer fest installierten Verfahreinrichtung aus der Arbeitsstellung in eine Servicestellung umgesetzt werden. Über der Servicestellung installierte Hebezeuge erleichtern eventuell erforderliche Reparaturen.

Die Zerkleinerer- oder Mühlen sind temperatur- und schallisoliert. Das gesamte System ist gekapselt und arbeitet quasi staubfrei.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1:**: die Seitenansicht eines Walzenzerkleinerers mit zwei gegeneinander drehbaren, aus einstückig mit einander verbundenen Zerkleinerungsscheiben unterschiedlicher Riffelung bestehenden Zerkleinerungswalzen;
- **Figur 2:**: die Seitenansicht einer Zerkleinerungsscheibe mit feiner Riffelung und einer Zerkleinerungsscheibe mit grober Riffelung und einer Zerkleinerungswalzenanordnung nach der Figur 1 im Detail;
- **Figur 3:**: die Draufsicht auf eine Zerkleinerungsscheibenanordnung nach der Figur 2.

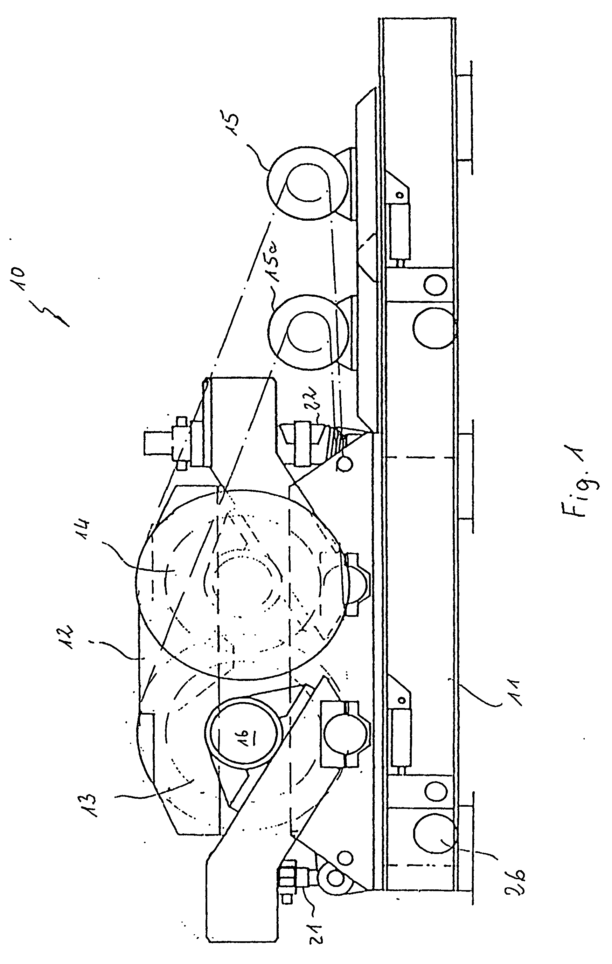

Der in der Figur 1 dargestellte Walzenzerkleinerer 10 besteht im wesentlichen aus einem Grundgestell 11, auf dem ein Gehäuse 12 angeordnet ist. In dem Gehäuse 12 sind zwei gegeneinander drehbare Zerkleinerungswalzen 13 und 14 angeordnet, die in Zerkleinerungswalzenlagern 16 drehbar gelagert sind.

Die Zerkleinerungswalzen 13 und 14 werden durch Zerkleinerungswalzenantriebe 15 und 15a angetrieben und sind in Zerkleinerungswalzenfederungen 22 abgefedert.

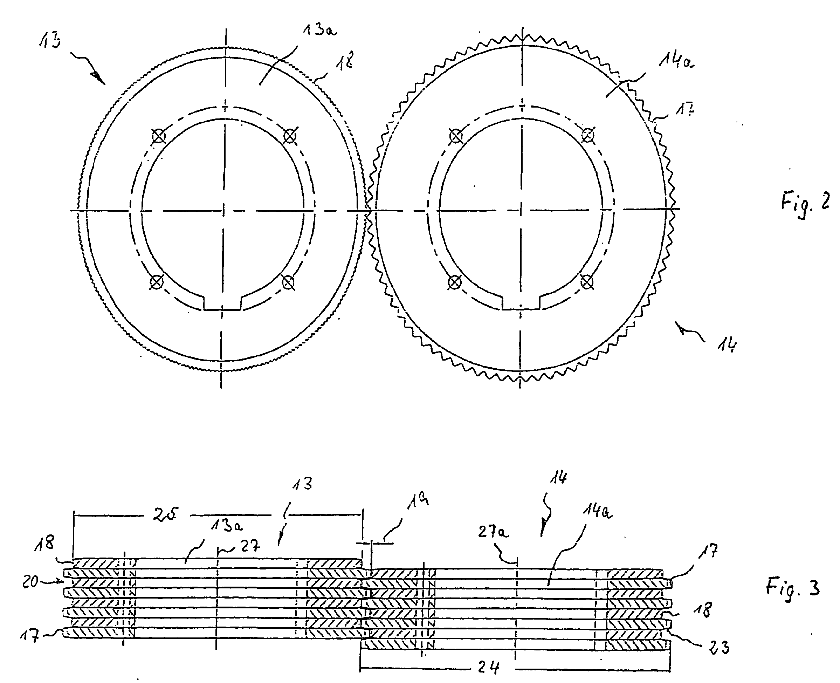

Wie die Figuren 2 und 3 zeigen, bestehen die Zerkleinerungswalzen 13 und 14 aus einer Vielzahl von nebeneinander angeordneten Zerkleinerungsscheiben 13a und 14a, die auf jeweils einer gemeinsamen Welle 27 bzw. 27a angeordnet sind.

Die Zerkleinerungsscheiben 13a weisen einen kleineren Durchmesser auf als die Zerkleinerungsscheiben 14a, deren Du chmesser 24 etwas größer ist. Die Zerkleinerungsscheiben 13a und 14a sind einstückig miteinander verbunden, wobei die kleineren Zerkleinerungsscheiben 13a mit einem Zerkleinerungsscheibenversatz 20 gegenüber den großen Zerkleinerungsscheiben 14a zurückgesetzt sind.

Die größeren Zerkleinerungsscheiben 14a weisen radial außen eine grobe Riffelung 17 auf, während die kleineren Zerkleinerungsscheiben 13a mit einer feinen Riffelung 18 versehen sind. Jede der Zerkleinerungswalzen 13 und 14 besteht aus einer Vielzahl von kleinen Zerkleinerungsscheiben 13a mit feiner Riffelung und größeren Zerkleinerungsscheiben 14a mit grober Riffelung 17, die abwechselnd nebeneinander liegen und einstückig mit einander verbunden sind.

Zwischen den Zerkleinerungswalzen 13 und 14 besteht ein Zerkleinerungsspalt 19, der mittels einer in der Figur 1 dargestellten Zerkleinerungsspalteinstellung 21 variabel einstellbar ist.

Durch den Zerkleinerungsscheibenversatz 20 sind jeweils eine große Zerkleinerungsscheibe 14a mit grober Riffelung 17 gegenüber einer kleineren Zerkleinerungsscheibe 13a mit feiner Riffelung 18 angeordnet.

Die Riffelungen 17 und 18 sind radial außen an den jeweiligen Zerkleinerungsscheiben 13a und 14a vorgesehen und weisen beiderseits axiale Konizitäten 23 auf. Durch die Konizitäten 23 verläuft der Zerkleinerungsspalt 19 zick-zack-förmig mit in Draufsicht trapezförmiger Kontur. Durch diese Anordnung kann eine Zerkleinerung von kryogen versprödetem Altgummi erreicht werden, das dabei eine für eine Weiterverarbeitung gut geeignete Oberflächenstruktur erhält. In das Gehäuse 12 kann während des Zerkleinerns ein flüssiges Tiefkühlmittel, vorzugsweise flüssiger Stickstoff, mit einer Temperatur von ca. 190 Kelvin eingesprüht werden.

Mittels einer Verfahreinrichtung 26 kann der Walzenzerkleinerer 10 problemlos aus der Arbeitsstellung in eine Servicestellung umgesetzt werden. Über der Servicestellung installierte - nicht dargestellte - Hebezeuge erleichtern eventuell erforderliche Reparaturen. Die Zerkleinerer 10 sind temperatur- und schallisoliert in dem Gehäuse 12 gekapselt und arbeiten praktisch staubfrei.

### Bezugszeichen

- 10: Walzenzerkleinerer
- 11: Grundgestell
- 12: Gehäuse
- 13, 14: Zerkleinerungswalze
- 13a: kleine Zerkleinerungsscheibe
- 14a: große Zerkleinerungsscheibe
- 15, 15a: Zerkleinerungswalzenantrieb
- 16: Zerkleinerungswalzenlagerung
- 17: grobe Riffelung
- 18: feine Riffelung
- 19: Zerkleinerungsspalt
- 20: Zerkleinerungsscheibenversatz
- 21: Zerkleinerungsspalteinstellung
- 22: Federung
- 23: Konizität
- 24, 25: Durchmesser
- 26: Verfahreinrichtung
- 27, 27a: gemeinsame Welle

## Patentansprüche

1. Walzenzerkleinerer mit in einem Gehäuse angeordneten, gegeneinander drehbaren Zerkleinerungswalzen (13, 14), die aus einer Vielzahl von nebeneinander angeordneten, unterschiedliche Durchmesser (24, 25) aufweisenden Zerkleinerungsscheiben (13a, 14a) bestehen, die Zerkleinerungsscheiben (13a, 14a) auf einer gemeinsamen Welle alternierend nebeneinander angeordnet sind, und zwar derart, dass jeweils die Zerkleinerungsscheiben (14a) großen Durchmessers einer Zerkleinerungswalze (14) gegenüber den Zerkleinerungsscheiben (13a) kleineren Durchmessers der anderen Zerkleinerungswalze (13) angeordnet sind, **dadurch gekennzeichnet, dass** die sich jeweils gegenüberliegend angeordneten Zerkleinerungsscheiben (13a, 14a) der Zerkleinerungswalzen (13, 14) mit unterschiedlich feinen Riffelungen (17, 18) versehen sind.

2. Walzenzerkleinerer nach Anspruch 1, **dadurch gekennzeichnet, dass** die Zerkleinerungsscheiben (13a), die mit einer feineren Riffelung (18) versehen sind einen geringeren Durchmesser aufweisen als die Zerkleinerungsscheiben (14a), die mit einer gröberen Riffelung (17) versehen sind.

## Claims

1. Roller-type comminuting apparatus comprising comminuting rollers (13, 14) mounted in a housing for rotating against each other in opposite directions, said comminuting rollers having a plurality of comminuting discs (13a, 14a) placed side by side and having different diameters and being mounted alternately side by side on common shafts in a manner such that each large-diameter comminuting disc (14a) of a comminuting roller is disposed opposite a smaller-diameter comminuting disc (13a) of the other comminuting roller (13), **characterized in that** the comminuting discs of each pair of oppositely disposed comminuting discs (13a, 14a) have different fine serrations (17, 18) thereon.

2. Roller-type comminuting apparatus as in claim 1, **characterized in that** the comminuting discs (13a) having finer serrations (18) thereon have a smaller diameter than the comminuting discs (14a) having coarser serrations (17) thereon.

## Revendications

1. Broyeur à rouleaux, avec des rouleaux de broyage (13, 14) disposés dans un boîtier en étant rotatifs en sens contraires, qui sont constitués d'une pluralité de disques de broyage (13a, 14a) de diamètres différents (24, 25) disposés en juxtaposition, les disques de broyage (13a, 14a) étant disposés alternativement en juxtaposition sur un arbre commun, et ce de telle sorte que les disques de broyage (14a) de grand diamètre d'un rouleau de broyage (14) sont respectivement disposés en vis-à-vis des disques de broyage (13a) de plus petit diamètre de l'autre rouleau de broyage (13), **caractérisé en ce que** les disques de broyage (13a, 14a) des rouleaux de broyage (13, 14) qui sont respectivement disposés en vis-à-vis sont pourvus de striages ou de cannelures (17, 18) de finesses différentes.

2. Broyeur à rouleaux selon la revendication 1, **caractérisé en ce que** les disques de broyage (13a) qui sont dotés d'un striage plus fin (18) présentent un plus petit diamètre que les disques de broyage (14a) qui sont dotés d'un striage plus grossier (17).
